Europäisches Patentamt

European Patent Office

Office européen des brevets

(19)

(11) Veröffentlichungsnummer : **0 065 581**
**B1**

(12)                    EUROPÄISCHE PATENTSCHRIFT

(45) Veröffentlichungstag der Patentschrift :
28.08.85

(21) Anmeldenummer : 81103938.7

(22) Anmeldetag : 22.05.81

(51) Int. Cl.⁴ : **B 62 D 33/06, B 60 R 13/08**

(54) Fahrerkabine für Kraftfahrzeuge, insbesondere Mähdrescher.

(43) Veröffentlichungstag der Anmeldung :
01.12.82 Patentblatt 82/48

(45) Bekanntmachung des Hinweises auf die Patenterteilung : 28.08.85 Patentblatt 85/35

(84) Benannte Vertragsstaaten :
AT BE CH DE FR GB IT LI NL SE

(56) Entgegenhaltungen :
DE-A- 1 555 390
DE-A- 2 164 411
FR-A- 2 089 612
FR-A- 2 291 897
US-A- 3 851 913
US-A- 3 954 150
US-A- 3 990 737
US-A- 4 066 058
US-A- 4 067 531

(73) Patentinhaber : DEERE & COMPANY
1 John Deere Road
Moline Illinois 61265 (US)

(72) Erfinder : Hahm, Günter
In der Gartenstrasse 8
D-6661 Kleinbundenbach (DE)
Erfinder : Pauli, Klaus, Dipl.-Ing.
Kantstrasse 12
D-6650 Homburg-Einöd (DE)
Erfinder : Schleicher, Walter
Finkenstrasse 30
D-6663 Delfeld (DE)

(74) Vertreter : Sartorius, Peter et al
DEERE & COMPANY European Office, Patent Department Postfach 503 Steubenstrasse 36-42
D-6800 Mannheim 1 (DE)

**Beschreibung**

Die Erfindung bezieht sich auf eine Fahrerkabine für Kraftfahrzeuge, insbesondere Mähdrescher, die allseitig verschließbar ist und über mindestens ein den Körper- und Luftschall absorbierendes, großflächiges Schwingungsisolierungselement auf dem Fahrzeug abstützbar ist.

Es ist bereits eine Fahrerkabine für einen Schlepper bekannt (US-E 29,123), die über zahlreiche Schwingungsisolierungselemente auf dem Rahmen des Schleppers abgestützt ist, um auf diese Weise die von dem Verbrennungsmotor ausgehenden Schwingungen zu absorbieren. Da die Fahrerkabine allseitig geschlossen und auch mit einem festen Boden ausgerüstet ist, wird gewährleistet, daß nur in sehr geringem Umfang Körperschall in die Fahrerkabine eindringt.

Es ist ferner eine geräuschdämpfende Bodenkonstruktion einer mit einem Stützrahmen ausgestatteten Maschine der eingangs aufgeführten Art bekannt (DE-A-2 164 411). Die geräuschdämpfende Bodenkonstruktion besteht hierzu aus mehreren einzelnen zusammengesetzten Schichten, wobei jeweils die äußeren Schichten aus einem nicht elastischen Material bestehen, zwischen denen das geräuschabsorbierende elastische Material eingeklemmt ist. Würde beispielsweise eine Fahrerkabine auf eine derartige Bodenkonstruktion abgestellt werden, so könnte nur ein Teil des Körperschalls durch die geräuschdämpfende Bodenkonstruktion absorbiert werden, da die außenliegenden, nicht elastischen Flächen der Bodenkonstruktion als Reflexionsflächen wirken und nicht zur Geräuschdämmung des Körperschalls beitragen. Lediglich ein Teil der von dem Fahrzeugrahmen ausgehenden Schwingungen kann durch die elastische mittlere Schicht absorbiert werden. Da jedoch ein großer Teil von Geräuschen, die beispielsweise von der Verbrennungskraftmaschine hervorgerufen werden, durch Luftschall übertragen wird, dringen diese Geräusche über die Reflexionsflächen, d. h. die äußeren Schichten der Bodenkonstruktion, beispielsweise in eine geschlossene Fahrerkabine.

Demgegenüber liegt jedoch der Erfindung die Aufgabe zugrunde, eine allseitig abschließbare Fahrerkabine so abzudichten, daß weder Körpernoch Luftschall in das Fahrerkabineninnere eindringen kann.

Diese Aufgabe ist dadurch gelöst worden, daß das Schwingungsisolierungselement als durchgehend elastische Matte ausgebildet ist, die zwischen den Außenseiten der Fahrerkabine und einer Abstützfläche des Fahrzeuges vorgesehen ist. Auf diese Weise können auch Fahrerkabinen, die zum Fahrzeugteil hin offen ausgebildet sind, durch eine durchgehend elastisch ausgebildete Matte so abgedichtet werden, daß die Geräusche innerhalb der Fahrerkabine auf ein Minimum herabgesetzt werden können. Somit lassen sich auf einfache Weise Körper- und Luftschall absorbieren, so daß nur noch ein kleiner Anteil der vom Fahrzeug bzw. von der Brennkraftmaschine ausgehenden Geräusche in das Innere der Fahrerkabine dringen kann. Hierzu ist es vorteilhaft, daß neben der elastischen Matte ein weiteres die Fahrerkabine abstützendes Schwingungsisolierungselement vorgesehen ist, das zur Verschwenkung der Fahrerkabine als Gelenk ausgebildet ist, und daß die Fahrerkabine an mindestens einer Stelle zum Fahrzeug hin eine Öffnung aufweist, die über das großflächige Schwingungsisolierungselement abgedichtet ist. Durch Abstützen der Fahrerkabine auf dem großflächigen Schwingungsisolierungselement erhält man auch bei nicht vollständig geschlossener Fahrerkabine eine gute Abdichtung der Fahrerkabine gegenüber dem Fahrzeugteil bzw. der Fahrerplattform des Mähdreschers.

In weiterer Ausgestaltung der Erfindung ist es vorteilhaft, daß die Fahrerkabine sich über die elastische Matte auf einer Fahrerplattform abstützt und daß das großflächige Schwingungsisolierungselement als Boden für die Fahrerkabine ausgebildet ist. Durch die besonders vorteilhaft ausgestaltete Fahrerkabine ohne fest mit dieser verbundenem Boden kann der Mähdrescher bzw. das Fahrzeug einmal mit einer Fahrerkabine und einmal ohne Fahrerkabine geliefert werden, zumal die auf der Fahrerplattform vorgesehenen Bedienungselemente nicht mit der Fahrerkabine verbunden sind. Auch bereits fertiggestellte Mähdrescher können mit einer derartigen Fahrerkabine ohne weiteres nachgerüstet werden, da die Fahrerkabine lediglich an die Schwingungsisolierungselemente angeschlossen und um diese verschwenkt wird, wobei die Bedienungselemente durch mindestens eine in der Fahrerkabine vorgesehene Öffnung geführt werden. Die Fahrerkabine wird so lange verschwenkt, bis sie sich auf der Bodenmatte abstützt. Danach kann sie mit den restlichen Schwingungsisolierungselementen verbunden werden. Durch diesen Anbau ist die Fahrerkabine nach außen hin gut schallisoliert abgedichtet.

Es zeigt

Figur 1  eine perspektivische Darstellung einer Fahrerkabine für einen Mähdrescher;

Figur 2  eine Seitenansicht der Fahrerkabine;

Figur 3  ein Schwingungsisolierungselement zur schwenkbaren Aufnahme der Fahrerkabine;

Figur 4  ein weiteres Schwingungsisolierungselement zur Aufnahme der Fahrerkabine.

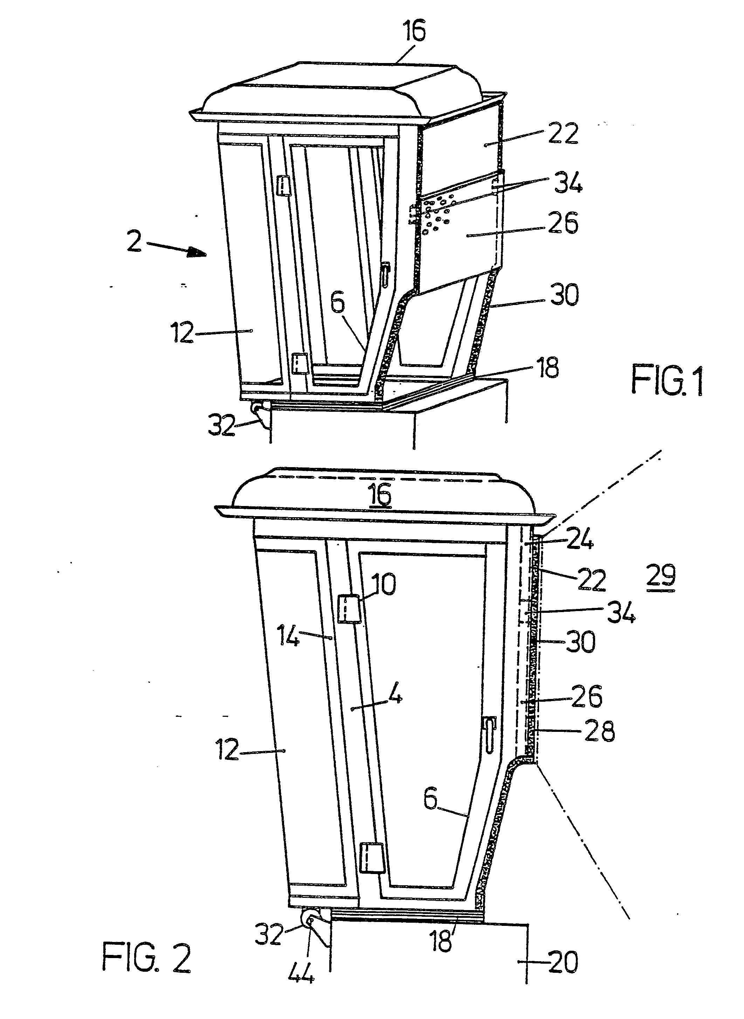

In der Zeichnung ist in Fig. 1 eine Fahrerkabine mit 2 bezeichnet, die aus einem Rahmen 4 besteht, an dem eine Tür 6 angeordnet ist, die über Scharniere 10 mit dem Rahmen 4 der Fahrerkabine 2 verbunden ist. Die Vorderseite der Fahrerkabine 2 weist eine Frontscheibe 12 auf, die über einen Dichtring 14 mit dem Rahmen 4 der Fahrerkabine 2 fest verbunden ist. Die Oberseite der Fahrerkabine 2 ist mit einem Dach 16 ausgerüstet, das zur Aufnahme von in der Zeichnung nicht weiter dargestellten Teilen, beispielsweise der Heizung, der Klimaanlage und des Gebläses dient.

Die Fahrerkabine 2 ist nach unten hin offen ausgebildet und sitzt auf einer als Schwingungsisolierungselement ausgebildeten Bodenmatte 18, die aus Gummi oder Schaumgummi oder einem anderen elastischen Material gebildet sein kann. Die Bodenmatte 18 bzw. das Gummimaterial muß so beschaffen sein, daß Körperschall bzw. Luftschall der von dem Mähdrescher bzw. dem Fahrzeug ausgeht nicht in das Innere der Fahrerkabine 2 dringen kann. Die Bodenmatte 18 liegt auf der Oberfläche einer Fahrerplattform 20 eines in der Zeichnung nicht weiter dargestellten Mähdreschers auf. Über die Bodenmatte 18 wird die untere Öffnung der Fahrerkabine (2) vollständig abgedichtet, so daß keine Geräusche, die von dem Fahrzeug ausgehen, in das Innere der Fahrerkabine 2 gelangen.

Die Rückseite der Fahrerkabine 2 weist eine Kabinenrückwand 22 im oberen Bereich der Fahrerkabine auf, die zwischen den Seitenteilen des Rahmens 4 angeordnet ist und an das Dach 16 anschließt. Auf der Innenoberseite der Rückwand 22 sitzt eine Dämmplatte 24, die zur Schallisolierung dient. An die Dämmplatte 24 schließt sich unterhalb der Rückwand 22 eine weitere Dämmplatte 26 an, die die rückwärtige Öffnung der Fahrerkabine 2 zum Fahrzeug bzw. einer Stirnseite 28 eines Sammelbehälters 29 abdeckt und an diesem befestigt ist. Der gesamte Rahmen 4 der Fahrerkabine 2 stützt sich weiterhin über ein im Querschnitt rechteckförmiges Moosgummiband 30 gegen die Stirnseite 28 ab, um die von dem in der Zeichnung nicht weiter dargestellten Sammelbehälter 29 ausgehenden Geräusche zu dämpfen. Das Moosgummi kann ebenso wie die Bodenmatte 18 großflächig ausgebildet und mit dieser einteilig verbunden sein. Die Fahrerkabine 2 wird über weitere Schwingungsisolierungselemente 32 und 34 zusätzlich gehalten bzw. gesichert.

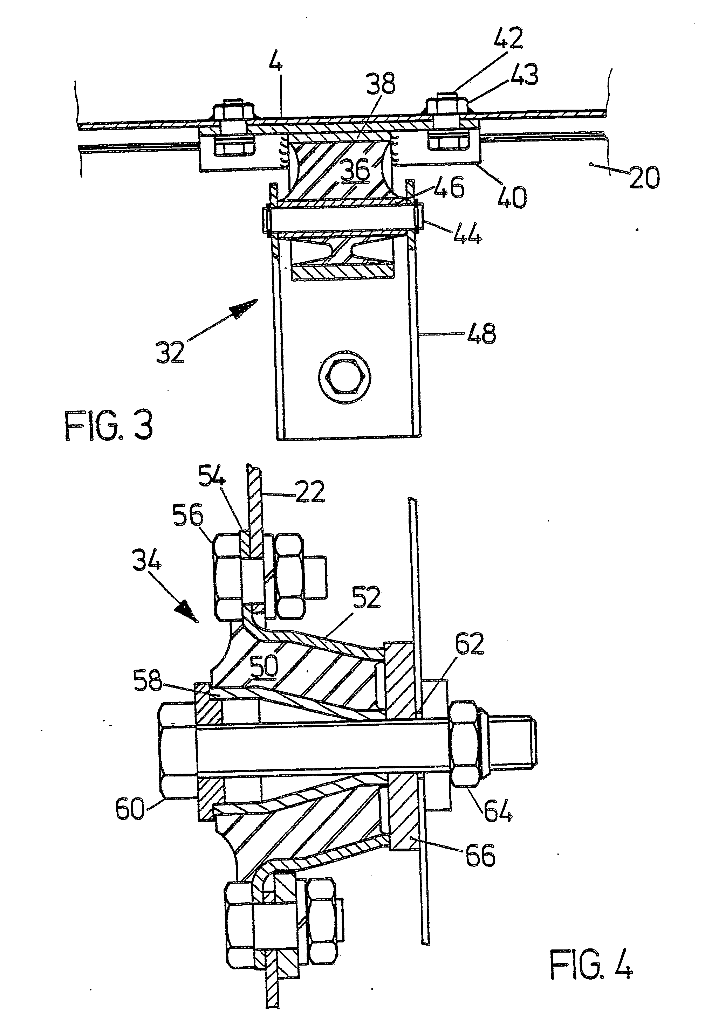

Das Schwingungsisolierungselement 32 ist in Fig. 3 weiter veranschaulicht und besteht aus einem Gummielement 36, das in einer Metallbuchse 38 aufgenommen ist, die mit einer nach unten offenen, U-förmigen Halterung 40 verschweißt ist. Die Halterung 40 ist über Schraubenbolzen 42 und Muttern 43 mit dem Rahmen 4 der Fahrerkabine 2 fest verbunden. Das Gummielement 36 weist zur Aufnahme eines Gelenkbolzens 44 eine Bohrung 46 auf, in der der Gelenkbolzen drehbar gelagert ist. Auf den stirnseitigen Enden des Gelenkbolzens 44 sitzt eine Halterung 48, die mit dem Fahrzeugrahmen bzw. der Fahrerplattform 20 fest verbunden ist.

Im mittleren Bereich der Rückseite der Fahrerkabine 2 sind die in Fig. 4 dargestellten Schwingungsisolierungselemente 34 angeordnet, die zur Verbindung des Rahmens 4 mit der Stirnseite 28 dienen. Das Schwingungsisolierungselement 34 besteht aus einem Gummiring 50, der in einer konischen Metallbuchse 52 sitzt, die mit einem Ringflansch 54 ausgerüstet ist, in der zur Aufnahme von Schraubenbolzen 56 Bohrungen angeordnet sind. Der Ringflansch 54 der Metallbuchse 52 stützt sich gegen die Kabinenrückwand 22 ab. Der Gummiring 50 sitzt auf einer Metallhülse 58, durch die ein Schraubenbolzen 60 gesteckt ist, der sich durch eine in der im Sammelbehälter 29 vorgesehene Bohrung 62 erstreckt und der mittels einer Mutter 64 gesichert ist. Auf diese Weise erhält man über das Schwingungsisolierungselement 34 eine feste Verbindung zwischen Fahrerkabine 2 und dem Sammelbehälter 29. Zwischen der Rückseite der Metallhülse 52 und der Vorderseite der Korntankwand 28 sitzt ein Gummiring 66, der verhindert, daß Körperschall, der von der Stirnseite 28 ausgeht, auf die Metallhülse 52 übertragen wird. Die Fahrerkabine 2 kann nach Lösen des Schraubenbolzens 60 und der zugehörigen Mutter 64 über den Gelenkbolzen 44 des Schwingungsisolierungselementes 34 nach vorne abgekippt werden. Da die Bodenmatte 18 auf die Oberfläche der Fahrerplattform 20 aufgebracht ist, wird die untere Öffnung der Fahrerkabine 2 freigegeben, wenn diese nach vorne verschwenkt wird.

Durch die besonders vorteilhaft ausgebildete Fahrerkabine (2), ohne fest mit dieser verbundenem Boden, kann der Mähdrescher bzw. das Fahrzeug einmal mit einer Fahrerkabine (2) und einmal ohne Fahrerkabine geliefert werden, zumal die auf der Fahrerplattform (20) vorgesehenen, in der Zeichnung nicht dargestellten Bedienungselemente nicht mit der Fahrerkabine verbunden sind. Auch bereits fertiggestellte Mähdrescher können mit einer derartigen Fahrerkabine (2) ohne weiteres nachgerüstet werden, da die Fahrerkabine lediglich an die Schwingungsisolierungselemente (32) angeschlossen und um diese verschwenkt wird, wobei die Bedienungselemente durch mindestens eine in der Fahrerkabine vorgesehene Öffnung geführt werden. Die Fahrerkabine wird solange verschwenkt, bis sie sich auf der Bodenmatte (18) abstützt. Danach kann sie mit den restlichen Schwingungsisolierungselementen (34) verbunden werden. Durch diesen Anbauvorgang ist die Fahrerkabine nach außen hin gut schallisoliert abgedichtet.

**Patentansprüche**

1. Fahrerkabine (2) für Kraftfahrzeuge, insbesondere Mähdrescher die allseitig verschließbar ist und über mindestens ein den Körper- und Luftschall absorbierendes, großflächiges Schwingungsisolierungselement auf dem Fahrzeug abstützbar ist, dadurch gekennzeichnet, daß das Schwingungsisolierungselement als durchgehend elastische Matte (18) ausgebildet ist, die zwischen den Außenseiten der Fahrerkabine und einer Abstützfläche des Fahrzeuges vorgesehen ist.

2. Fahrerkabine nach Anspruch 1, dadurch gekennzeichnet, daß neben der elastischen Matte (18) ein weiteres die Fahrerkabine (2) abstützendes Schwingungsisolierungselement (32, 34) vorgesehen ist, das zur Verschwenkung der Fahrerkabine als Gelenk asugebildet ist.

3. Fahrerkabine nach Anspruch 1, dadurch gekennzeichent, daß die Fahrerkabine (2) an mindestens einer Stelle zum Fahrzeug hin eine Öffnung aufweist, die über das großflächige Schwingungsisolierungselement (Bodenmatte 18) abgedichtet ist.

4. Fahrerkabine nach einem oder mehreren der vorherigen Ansprüche, dadurch gekennzeichnet, daß die Fahrerkabine (2) sich über die elastische Matte (18) auf einer Fahrerplattform (20) abstützt.

5. Fahrerkabine nach einem oder mehreren der vorherigen Ansprüche, dadurch gekennzeichnet, daß das großflächige Schwingungsisolierungselement (18) als Boden für die Fahrerkabine (2) ausgebildet ist.

## Claims

1. A driving cab (2) for motor vehicles, in particular combine harvesters, which can be closed on all sides and which can be supported on the vehicle by way of at least one large-area vibration insulating element which absorbs sound which is transmitted through the air and by conduction through solids, characterised in that the vibration insulating element is in the form of a mat (18) which is elastic throughout and which is provided between the outsides of the driving cab and a support surface of the vehicle.

2. A driving cab according to claim 1, characterised in that besides the elastic mat (18) there is a further vibration insulating element (32, 34) for supporting the driving cab (2), said further vibration insulating element being in the form of a pivot means for pivotal movement of the driving cab.

3. A driving cab according to claim 1, characterised in that the driving cab (2) has an opening towards the vehicle at at least one location, said opening being sealed off by way of the large-area vibration insulating elemet (floor mat 18).

4. A driving cab according to one or more of the preceding claims, characterised in that the driving cab (2) is supported by way of the elastic mat (18) on a driving platform (20).

5. A driving cab according to one or more of the preceding claims, characterised in that the large-area vibration insulating element (18) is formed as the floor for the driving cab (2).

## Revendications

1. Cabine de conduite (2) pour véhicules à moteur, en particulier pour moissonneuses-batteuses, pouvant être fermée de tous côtés et pouvant prendre appui sur le véhicule par au moins un élément d'isolation contre les vibrations de grande surface, absorbant les bruits transmis par le corps de la machine et par l'air, caractérisée en ce que l'élément d'isolation contre les vibrations est constitué par une nappe ou un tapis (18) élastique dans toute son étendue, qui prévu entre les surfaces extérieures de la cabine de conduite et une surface d'appui du véhicule.

2. Cabine de conduite suivant la revendication 1, caractérisée en ce qu'il est prévu, outre la nappe élastique (18), un autre élément (32, 34) d'isolation contre les vibrations, servant d'appui à la cabine (2) et qui est agencé à la manière d'une articulation pour permettre le basculement de la cabine.

3. Cabine de conduite suivant la revendication 1, caractérisée en ce que la cabine (2) présente en au moins un endroit un orifice ouvert en direction du véhicule, qui est obturé de façon étanche par l'élément d'isolation contre les vibrations de grande surface (nappe ou tapis de sol 18).

4. Cabine de conduite suivant l'une quelconque des revendications précédentes, caractérisée en ce que la cabine (2) prend appui par l'intermédiaire de la nappe ou du tapis élastique (18) sur une plate-forme (20) de poste de conduite.

5. Cabine de conduite suivant l'une quelconque des revendications précédentes, caractérisée en ce que l'élément d'isolation contre les vibrations de grande surface (18) est agencé de manière à servir de plancher pour la cabine (2).

**FIG.1**

**FIG. 2**

FIG. 3

FIG. 4